# EUROPEAN PATENT SPECIFICATION

(11) **EP 3 756 981 B1**
(45) Date of publication and mention of the grant of the patent: **04.05.2022**
(21) Application number: 19219686.3
(22) Date of filing: 24.12.2019
(51) Int. Cl.: B62D 35/00, B62D 37/02

(54) **ACTIVE SPOILER STRUCTURE CAPABLE OF OPENING BY ROTATION**
AKTIVE SPOILERSTRUKTUR, DIE SICH DURCH DREHUNG ÖFFNEN LÄSST
STRUCTURE DÉFLECTEUR ACTIF POUVANT S'OUVRIR PAR ROTATION

(30) Priority: 28.06.2019 CN 201910583922
(43) Date of publication of application: 30.12.2020
(73) Proprietor: Yanfeng Plastic Omnium Automotive Exterior Systems Co., Ltd., Shanghai 201805 (CN); Compagnie Plastic Omnium SE, 69007 Lyon (FR)
(72) Inventor: LIU, Xiaoshan, SHANGHAI, 201805 (CN)
(74) Representative: LLR

(56) References cited:
- JP-U- H 068 169
- US-A- 4 756 568
- US-A1- 2004 256 885
- US-A1- 2017 274 943

## Description

### FIELD OF THE INVENTION

The present invention relates to the field of spoilers, and more specifically, to an active spoiler structure capable of opening by rotation.

### BACKGROUND OF THE INVENTION

Currently, to reduce wind resistance of an assembled vehicle, a measure generally adopted is to increase the aerodynamic downforce when the vehicle moves at a high speed. Specifically, a fixed spoiler that remains unchanged is employed, or a structure with four connecting rods that has relatively poor stability is employed to drive a spoiler to open and close. An example of such an active spoiler is given in US 4756568.

However, with this type of assembly form, the cumulative assembly error of a spoiler is significant, very high precision of machining of parts themselves is required, and the parts depend very much on the control of an electric motor with a large torque. Therefore, how to adapt to a speed change of a vehicle at a low cost but with a high efficiency by providing an active spoiler that can open and close according to different driving conditions so as to achieve reducing wind resistance and increasing the vehicle's aerodynamic downforce is a problem that urgently needs to be resolved.

### SUMMARY OF THE INVENTION

An objective of the present invention is to provide an active spoiler structure capable of opening by rotation, so as to resolve the problems of large assembly error and high processing accuracy requirements of the spoiler structure in the prior art.

To resolve the above-mentioned technical problem, the present invention adopts the following technical solution:
An active spoiler structure capable of opening by rotation is provided. The active spoiler structure comprises:
- a spoiler mounted at a tail of a vehicle and provided with a first lug and a second lug at its rear side;
- a rocker rotating support mounted to the rear side of the spoiler through the first lug and the second lug;
- an assisting rocker connected to the rocker rotating support through the first lug, another end of the assisting rocker being fixed to a gear rack fixing pressing plate;
- an electric motor connected in signal to an electronic control unit;
- a rotary shaft configured to be driven to rotate by the electric motor;
- a gear being sleeved at a terminal end of the rotary shaft and capable of rotating therewith; and,
- a sliding gear rack, one end of the sliding gear rack engaging with the gear and the other end of the sliding gear rack being connected to the rocker rotating support, the sliding gear rack being positionally limited by the gear rack fixing pressing plate;
wherein, according to a real time speed of the vehicle and under the control of the electronic control unit, the spoiler can open by rotation from a closed position, and remains at an optimal angle that can minimize the wind resistance and maximize the aerodynamic downforce.

The sliding gear rack is fixed to the rocker rotating support at a location between the first lug and the second lug.

The assisting rocker is provided with a position limiting structure providing the locking and immobilization function.

When the assisting rocker is locked and immobilized by means of the position limiting structure, under the continuous pushing of the sliding gear rack, the rocker rotating support rotates around the joint between the rocker rotating support and the first lug as a center, thus driving the spoiler to rotate and open.

The active spoiler structure is in an axisymmetric structure centered on the electric motor, wherein a same electric motor drives the left and right two gears to rotate and then drives the left and right two sliding gear racks to move, such that the opening or closing by rotation of the spoiler is realized in a synchronized manner.

The sliding gear rack is in a L-shaped structure.

The sliding gear rack is provided with saw teeth on one side.

The gear rack fixing pressing plate is fixed to a fixing base by means of a fastening member.

The spoiler is in an oblong sheet-shaped structure.

The spoiler cooperates in form fitting with a vehicle tailgate in the closed position, and forms with the vehicle tailgate a passage for airflow between the spoiler and the vehicle tailgate in a opened position.

According to the active spoiler structure provided by the present invention, the gear is driven to rotate by the rotation and force transmission of the electric motor, and in turn, transmits a force to drive the gear rack to move, thus driving the spoiler to open by rotation, changing the trend of airflow vortex during the course of driving a vehicle, and finally realizing the vortex away from the rear of the vehicle, thereby reducing the wind resistance. Thus, vehicle energy saving and emission reduction can be realized and the life of new energy batteries can be extended.

In summary, the present invention provides an active spoiler structure that can effectively reduce the risk to safe driving caused by an excessive lifting force of a vehicle due to an excessive speed, and reduce energy consumption and increase the service life of energy batteries, thus realizing high speed safe driving, environmental protection, energy saving and emission reduction.

### BRIEF DESCRIPTION OF THE DRAWINGS

FIG. 1 is a schematic view of an active spoiler structure provided according to a preferred embodiment of the present invention, in a closed state on an assembled vehicle;
FIG. 2 is a lateral view of the rear of the vehicle in the state shown in FIG. 1;
FIG. 3 is a schematic view of an active spoiler structure provided according to a preferred embodiment of the present invention, in a opened state on an assembled vehicle;
FIG. 4 is a lateral view of the rear of the vehicle in the state shown in FIG. 3;
FIG. 5 is an overall assembled view of an active spoiler structure provided according to a preferred embodiment of the present invention on an assembled vehicle;
FIG. 6 is a sectional view along the sectional line B-B in FIG. 5;
FIG. 7 is an enlarged schematic view of a partial detail of the active spoiler structure.

### DETAILED DESCRIPTION OF THE EMBODIMENTS

The present invention is further described below with reference to specific embodiments. It should be understood that, the following embodiments are merely used to describe the present invention and not to limit the scope of the present invention.

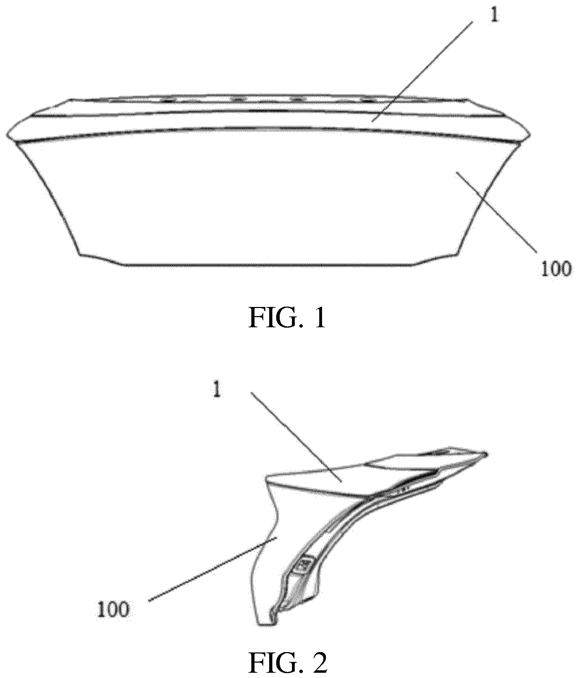

In reference to FIG. 1 and FIG. 2, an active spoiler structure capable of opening by rotation is provided according to a preferred embodiment of the present invention. A spoiler 1 in the active spoiler structure cooperates in form fitting with a vehicle tailgate 100 in a closed state, and does not have any effect on an assembled vehicle's wind resistance.

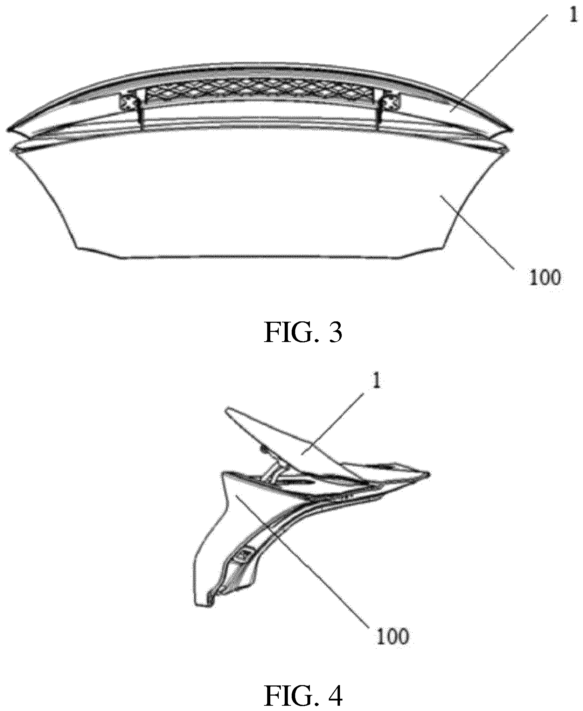

In reference to FIG. 3 and FIG. 4, the spoiler 1 in the active spoiler structure forms with the vehicle tailgate 100 a passage for air to flow through in between in a opened state, thus reducing air drag, achieving a reduction of vehicle energy consumption and emissions, increasing the life of service of new energy cells, and at the same time, increasing the downforce and overcoming the problem of unstable driving and insufficient safety.

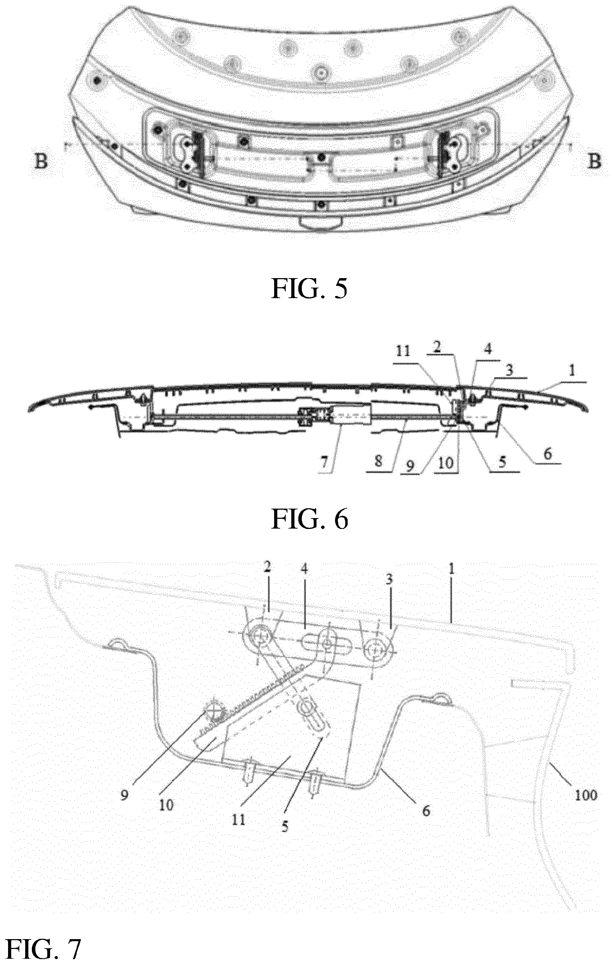

Specifically, the active spoiler structure provided according to this preferred embodiment is as shown in FIG. 5 to FIG. 7, and is described in detail as follows:
The active spoiler structure comprises: a spoiler 1 in an oblong sheet-shaped structure; a first lug 2 and a second lug 3 provided at the rear side of the spoiler 1; a rocker rotating support 4 mounted to the rear side of the spoiler 1 through the first lug 2 and the second lug 3; an assisting rocker 5 connected to the rocker rotating support 4 through the first lug 2, another end of the assisting rocker 5 being fixed to a gear rack fixing pressing plate 11, the assisting rocker 5 being provided with a position limiting structure providing a locking and immobilizing function, the gear rack fixing pressing plate 11 being fastened to a fixing base 6 through a bolt (or a screw); an electric motor 7 connected in signal to an electronic control unit (ECU); a rotary shaft 8 driven to rotate by the electric motor 7; a gear 9 that is sleeved at a terminal end of the rotary shaft 8 and rotatable with the rotary shaft 8; and, a sliding gear rack 10 of which one end engages with the gear 9 and another end is connected to the rocker rotating support 4, the sliding gear rack 10 being fixed to the rocker rotating support 4 at a location between the first lug 2 and the second lug 3, as shown in FIG. 7, the sliding gear rack 10 being of an arc-shaped structure and provided with saw teeth on one side.

Preferably, the sliding gear rack 10 is positionally limited by the gear rack fixing pressing plate 11, so that it can only move back and forth in one plane under the driving of the gear 9.

According to this preferred embodiment, the active spoiler structure is an axisymmetric structure centered on the electric motor 7, simultaneously driving the left and right two gears 9 to rotate by the same electric motor 7, thereby driving the left and right two sliding gear racks 10 to move, and achieving in a synchronized manner the opening or closing by rotation of the spoiler 1.

The principle of operation of the active spoiler structure provided according to the above-described preferred embodiment is as follows:
A vehicle speed sensor captures the speed of the vehicle, and sends a signal to the electronic control unit. The electronic control unit in turn sends a signal to the electric motor 7. The electric motor 7 drives the rotary shaft 8 to rotate, and thus drives the gears 9 to rotate. The sliding gear rack 10 engaging with the gear 9 moves in an oblique upward direction with the rotation of the gear; when the sliding gear racks 10 move upward to a predetermined position, the assisting rocker 5 will be locked and immobilized by the position limiting structure. The electric motor 7 continues to drive the sliding gear racks 10 to move upward; under the continuous pushing of the sliding gear racks 10, the rocker rotating support 4 is further turned upward around the joint between the rocker rotating support 4 and the first lug 2 as a center, so that the spoiler 1 rotates and opens to a certain angle, the angle being better when it reduces wind resistance and increases the aerodynamic downforce to the maximum, thus achieving the effect of reducing energy consumption and emissions and the assembled vehicle's high speed safe driving.

As the vehicle speed changes, under the control of the electronic control unit, the electric motor 7 further controls the angle of opening of the spoiler 1, achieving maximum reduction of wind resistance and increase of aerodynamic downforce.

When the vehicle speed captured by the vehicle speed sensor slows down gradually to zero, a signal is sent to the electronic control unit, which in turn sends a signal to the electric motor 7. The electric motor 7 drives the rotary shaft 8 to rotate in the opposite direction. The sliding gear racks 10 engaging with the gears 9 move downward with the rotation of the gears. The rocker rotating support 4 thus rotates downward around the joint between the rocker rotating support 4 and the first lug 2 as the center. Subsequently, the assisting rocker 5 is unlocked. The electric motor 7 continues to rotate, driving the sliding gear racks 10 to move downward. Under the continuous pulling of the sliding gear racks 10, the spoiler 1 moves downward until cooperating in form fitting with the vehicle tailgate 100, ultimately achieving the closing of the spoiler 1.

According to a preferred embodiment of the present invention, the electric motor rotates forward to control the above-described movement mechanism to realize the opening of the spoiler; while the electric motor rotates reversely to control the above-described movement mechanism to achieve the closing of the spoiler.

In the embodiment, the specific angle of opening of the spoiler 1 is an angle calculated by analysis and verification upon the vehicle wind-tunnel experimental tests.

What has been described above are merely preferred embodiments of the present invention, and is not intended to limit the scope of the present invention. Various changes may be further made to the above-described embodiments of the present invention. The invention is defined by the claims only.

Conventional technologies are not described in detail in the present invention.

## Claims

1. An active spoiler structure capable of opening by rotation, **characterized in that**, the active spoiler structure comprises:
- a spoiler (1) mounted at a tail of a vehicle and provided with a first lug (2) and a second lug (3) at its rear side;
- a rocker rotating support (4) mounted to the rear side of the spoiler (1) through the first lug (2) and the second lug (3);
- an assisting rocker (5) connected to the rocker rotating support (4) through the first lug (2), another end of the assisting rocker (5) being fixed to a gear rack fixing pressing plate (11);
- an electric motor (7) connected in signal to an electronic control unit;
- a rotary shaft (8) configured to be driven to rotate by the electric motor (7);
- a gear (9) being sleeved at a terminal end of the rotary shaft (8) and capable of rotating therewith; and,
- a sliding gear rack (10), one end of the sliding gear rack (10) engaging with the gear (9) and the other end of the sliding gear rack (10) being connected to the rocker rotating support (4), the sliding gear rack being positionally limited by the gear rack fixing pressing plate (11);
wherein, according to a real time speed of the vehicle and under the control of the electronic control unit, the spoiler (1) can open by rotation from a closed position, and remains at an optimal angle that can minimize the wind resistance and maximize the aerodynamic downforce.

2. The active spoiler structure according to claim 1, wherein the sliding gear rack (10) is fixed to the rocker rotating support (4) at a location between the first lug (2) and the second lug (3).

3. The active spoiler structure according to any one of the previous claims, wherein the assisting rocker (5) is provided with a position limiting structure providing the locking and immobilization function.

4. The active spoiler structure according to any one of the previous claims, wherein when the assisting rocker (5) is locked and immobilized by means of the position limiting structure, under a continuous pushing of the sliding gear rack (10), the rocker rotating support (4) rotates around the joint between the rocker rotating support (4) and the first lug (2) as a center, thus driving the spoiler (1) to rotate and open.

5. The active spoiler structure according to any one of the previous claims, wherein the active spoiler structure is in an axisymmetric structure centered on the electric motor (7), wherein a same electric motor drives the left and right two gears (9) to rotate and then drives the left and right two sliding gear racks (10) to move, such that the opening or closing by rotation of the spoiler (1) is realized in a synchronized manner.

6. The active spoiler structure according to any one of the previous claims , wherein the sliding gear rack (10) is in a L-shaped structure.

7. The active spoiler structure according to any one of the previous claims, wherein the sliding gear rack (10) is provided with saw teeth on one side.

8. The active spoiler structure according to any one of the previous claims, wherein the gear rack fixing pressing plate (11) is fixed to a fixing base (6) by means of a fastening member.

9. The active spoiler structure according to any one of the previous claims, wherein the spoiler (1) is in an oblong sheet-shaped structure.

10. The active spoiler structure according to any one of the previous claims, wherein the spoiler (1) cooperates in form fitting with a vehicle tailgate (100) in the closed position, and forms with the vehicle tailgate (100) a passage for airflow between the spoiler (1) and the vehicle tailgate (100) in a opened position.

## Patentansprüche

1. Aktive Spoilerstruktur, die durch Drehung geöffnet werden kann, **dadurch gekennzeichnet, dass** die aktive Spoilerstruktur aufweist:
- einen Spoiler (1), der am Heck eines Fahrzeugs angebracht und mit einer ersten Lasche (2) und einer zweiten Lasche (3) an seiner Rückseite versehen ist;
- einen Schwingendrehträger (4), der an der Rückseite des Spoilers (1) durch die erste Lasche (2) und die zweite Lasche (3) befestigt ist;
- eine Hilfsschwinge (5), die über die erste Lasche (2) mit dem Schwingendrehträger (4) verbunden ist, wobei ein anderes Ende der Hilfsschwinge (5) an einer Zahnstangenbefestigungsdruckplatte (11) befestigt ist;
- einen Elektromotor (7), der signalmäßig mit einer elektronischen Steuereinheit verbunden ist;
- eine drehbare Welle (8), die so konfiguriert ist, dass sie durch den Elektromotor (7) in Drehung versetzt wird;
- ein Zahnrad (9), das an einem Ende der drehbaren Welle (8) angebracht ist und sich mit dieser drehen kann; und,
- eine verschiebbare Zahnstange (10), wobei ein Ende der verschiebbaren Zahnstange (10) in das Zahnrad (9) eingreift und das andere Ende der verschiebbaren Zahnstange (10) mit dem Schwingendrehträger (4) verbunden ist, wobei die verschiebbare Zahnstange durch die Zahnstangenbefestigungsdruckplatte (11) positionsmäßig begrenzt ist;
wobei sich der Spoiler (1) in Abhängigkeit von der Echtzeitgeschwindigkeit des Fahrzeugs und unter der Steuerung der elektronischen Steuereinheit durch Drehung aus einer geschlossenen Position öffnen kann und in einem optimalen Winkel verbleibt, der den Windwiderstand minimieren und den aerodynamischen Abtrieb maximieren kann.

2. Aktive Spoilerstruktur nach Anspruch 1, bei der die verschiebbare Zahnstange (10) an einer Stelle zwischen der ersten Lasche (2) und der zweiten Lasche (3) an der Schwingendrehträger (4) befestigt ist.

3. Aktive Spoilerstruktur nach einem der vorhergehenden Ansprüche, wobei die Hilfsschwinge (5) mit einer Positionsbegrenzungsstruktur versehen ist, die die Verriegelungs- und Immobilisierungsfunktion bereitstellt.

4. Aktive Spoilerstruktur nach einem der vorhergehenden Ansprüche, bei der, wenn die Hilfsschwinge (5) durch die Positionsbegrenzungsstruktur verriegelt und immobilisiert ist, sich der Schwingendrehträger (4) unter ständigem Schieben der verschiebbare Zahnstange (10) um die Verbindung zwischen dem Schwingendrehträger (4) und der ersten Lasche (2) als Zentrum dreht und so den Spoiler (1) zum Drehen und Öffnen antreibt.

5. Aktive Spoilerstruktur nach einem der vorhergehenden Ansprüche, wobei die aktive Spoilerstruktur eine achsensymmetrische Struktur aufweist, die auf den Elektromotor (7) zentriert ist, wobei ein und derselbe Elektromotor die beiden linken und rechten Zahnräder (9) antreibt, um sich zu drehen, und dann die beiden linken und rechten verschiebbaren Zahnstangen (10) antreibt, um sich zu bewegen, so dass das Öffnen oder Schließen durch Drehung des Spoilers (1) in einer synchronisierten Weise realisiert wird.

6. Aktive Spoilerstruktur nach einem der vorhergehenden Ansprüche, wobei die verschiebbare Zahnstange (10) eine L-förmige Struktur aufweist.

7. Aktive Spoilerstruktur nach einem der vorhergehenden Ansprüche, wobei die verschiebbare Zahnstange (10) auf einer Seite mit Sägezähnen versehen ist.

8. Aktive Spoilerstruktur nach einem der vorhergehenden Ansprüche, wobei die Zahnstangenbefestigungsdruckplatte (11) mittels eines Befestigungselements an einer Befestigungsbasis (6) befestigt ist.

9. Aktive Spoilerstruktur nach einem der vorhergehenden Ansprüche, wobei der Spoiler (1) eine längliche, blattförmige Struktur aufweist.

10. Aktive Spoilerstruktur nach einem der vorhergehenden Ansprüche, wobei der Spoiler (1) in der geschlossenen Position formschlüssig mit einer Fahrzeugheckklappe (100) zusammenwirkt und in einer geöffneten Position mit der Fahrzeugheckklappe (100) einen Durchgang für den Luftstrom zwischen dem Spoiler (1) und der Fahrzeugheckklappe (100) bildet.

## Revendications

1. Structure de déflecteur actif apte à s'ouvrir par rotation, **caractérisée en ce que** la structure de déflecteur actif comprend :
- un déflecteur (1) monté à l'arrière d'un véhicule et muni d'une première patte (2) et d'une seconde patte (3) sur son côté arrière ;
- un support rotatif à bascule (4) monté sur le côté arrière du déflecteur (1) à travers la première patte (2) et la seconde patte (3) ;
- une bascule d'assistance (5) reliée au support rotatif à bascule (4) par l'intermédiaire de la première patte (2), une autre extrémité de la bascule d'assistance (5) étant fixée à une plaque d'appui de fixation de crémaillère (11) ;
- un moteur électrique (7) relié en signal à une unité de commande électronique ;
- un arbre rotatif (8) configuré pour être entraîné en rotation par le moteur électrique (7) ;
- un engrenage (9) étant manchonné à une extrémité terminale de l'arbre rotatif (8) et capable de tourner avec celui-ci ; et,
- une crémaillère coulissante (10), une extrémité de la crémaillère coulissante (10) s'engageant avec l'engrenage (9) et l'autre extrémité de la crémaillère coulissante (10) étant reliée au support rotatif à bascule (4), la crémaillère coulissante étant limitée en position par la plaque d'appui de fixation de crémaillère (11) ;
dans lequel, selon une vitesse en temps réel du véhicule et sous le contrôle de l'unité de commande électronique, le déflecteur (1) peut s'ouvrir par rotation à partir d'une position fermée, et reste à un angle optimal qui peut minimiser la résistance au vent et maximiser l'appui aérodynamique.

2. Structure selon la revendication 1, dans laquelle la crémaillère coulissante (10) est fixée au support rotatif à bascule (4) à un emplacement compris entre la première patte (2) et la deuxième patte (3).

3. Structure selon l'une des revendications précédentes, dans laquelle la bascule d'assistance (5) est munie d'une structure de limitation de position fournissant la fonction de verrouillage et d'immobilisation.

4. Structure selon l'une quelconque des revendications précédentes, dans laquelle la bascule d'assistance (5) est verrouillée et immobilisée au moyen de la structure de limitation de position, sous une poussée continue de la crémaillère coulissante (10), le support rotatif à bascule (4) tourne autour du joint entre le support rotatif de la bascule (4) et la première patte (2) en tant que centre, entraînant ainsi le déflecteur (1) à tourner et à s'ouvrir.

5. Structure selon l'une quelconque des revendications précédentes, dans laquelle la structure de déflecteur actif est dans une structure axisymétrique centrée sur le moteur électrique (7), dans laquelle un même moteur électrique entraîne à gauche et à droite deux engrenages (9) à tourner, puis entraîne à gauche et à droite deux crémaillères coulissantes (10) pour se déplacer, de telle sorte que l'ouverture ou la fermeture par rotation du déflecteur (1) soit réalisée de manière synchronisée.

6. Structure selon l'une quelconque des revendications précédentes , dans laquelle la crémaillère coulissante (10) est dans une structure en forme de L.

7. Structure selon l'une des revendications précédentes, dans laquelle la crémaillère coulissante (10) comporte une dent de scie sur un côté.

8. Structure selon l'une quelconque des revendications précédentes, dans laquelle la plaque d'appui de fixation de crémaillère (11) est fixée à une base de fixation (6) au moyen d'un élément de fixation.

9. Structure selon l'une des revendications précédentes, dans laquelle le déflecteur (1) est dans une structure oblongue en forme de feuille.

10. Structure selon l'une quelconque des revendications précédentes, dans laquelle le déflecteur (1) coopère à la forme d'un hayon de véhicule (100) en position fermée, et forme avec le hayon de véhicule (100) un passage pour le passage d'air entre le déflecteur (1) et le hayon de véhicule (100) en position ouverte.
